# EUROPEAN PATENT APPLICATION

(11) **EP 2 186 851 A1**
(43) Date of publication of application: **19.05.2010**
(21) Application number: 08828984.8
(22) Date of filing: 08.09.2008
(51) Int. Cl.: C08J 7/00, G02B 6/122, G02B 6/42

(54) **PROCESS FOR PRODUCING MATERIAL**

(30) Priority: 07.09.2007 JP 2007233348; 31.03.2008 JP 2008092346
(71) Applicant: The Furukawa Electric Co., Ltd., Chiyoda-ku Tokyo 100-8322 (JP)
(72) Inventor: IWASE, Masayuki, Tokyo 100-8322 (JP)
(74) Representative: Schwabe - Sandmair - Marx
(86) International application number: PCT/JP2008/066194
(87) International publication number: WO 2009/031685

(57) **Abstract**

According to the present invention, singlet oxygen is generated by irradiating a laser beam L of 1270 nanometers in a state with oxygen molecules 11 penetrated into a processing target 10, and a bond in a molecular structure of a material in a processing target area A is broken by the generated singlet oxygen to cause a polymerization reaction or a substitution reaction to change a molecular weight of the processing target 10, thereby producing a desired material. Accordingly, it is possible to change characteristics of the processing target only in the processing area A by using activated oxygen without performing any heat treatment.

## Description

### TECHNICAL FIELD

The present invention relates to a material producing method for producing a desired material by causing a polymerization reaction or a substitution reaction to change a molecular weight of the material.

### BACKGROUND ART

Conventionally, there has been known a method in which activated oxygen in a state of being activated more than normal oxygen molecules (O₂) is generated by heat treatment to change characteristics of a material using the activated oxygen (see Nonpatent Literature 1). Examples of such activated oxygen include superoxide (•O₂⁻), hydroxyl radical (HO•), and singlet oxygen (¹O₂).

Nonpatent Literature 1: "Chemistry of Active Oxygen Species [Quarterly Review of Chemistry No. 7]" edited by The Chemical Society of Japan, 1st edition, Publication Center of the Society, April 1990, p.29-36

### DISCLOSURE OF INVENTION

### PROBLEM TO BE SOLVED BY THE INVENTION

However, in a conventional heat treatment method, areas and materials other than a processing target to be changed in characteristics are also heated by heating the processing target, and these other parts get changed as well. Therefore, it has been difficult to keep the characteristics of those areas and materials other than the processing target. That is, according to the conventional heat treatment method, it has been difficult to locally change the characteristics of a material using activated oxygen to produce a desired material.

An object of the present invention is to provide a material producing method that is able to locally change characteristics of a material using activated oxygen.

### MEANS FOR SOLVING PROBLEM

To solve the above described problems and achieve the object, a material producing method according to the present invention is **characterized in that** singlet oxygen is generated by irradiating light having an energy capable of changing at least an oxygen molecule to singlet oxygen, in a state with the oxygen molecule being penetrated into a material or a state with the oxygen molecule being present on a surface of the material, and a bond in a molecular structure in the material is broken by the generated singlet oxygen to cause a polymerization reaction or a substitution reaction to change a molecular weight of the material, thereby producing a desired material.

The material producing method according to this invention is **characterized in that** in the above invention, the singlet oxygen is generated by irradiating light having at least a wavelength near 1270 nanometers.

The material producing method according to this invention is **characterized in that** in the above invention, the desired material has a molecular weight greater than that of the material.

The material producing method according to this invention is **characterized in that** in the above invention, the desired material has a molecular weight less than that of the material.

The material producing method according to this invention is **characterized in that** in the above invention, the material is a silicone resin.

The material producing method according to this invention is **characterized in that** in the above invention, a methyl group in the silicone resin is broken off by the generated singlet oxygen to cause the polymerization reaction or the substitution reaction to cause vitrification.

The material producing method according to this invention is **characterized in that** in the above invention, a group other than the methyl group is broken off by irradiating the light having the energy capable of changing at least the oxygen molecule to the singlet oxygen as well as light having an energy capable of breaking off the group other than the methyl group, and the generated singlet oxygen is used to cause a polymerization reaction or a substitution reaction at a position where the group other than the methyl group has been broken off.

The material producing method according to this invention is **characterized in that** in the above invention, the singlet oxygen is generated by irradiating light having a peak near 1270 nanometers.

The material producing method according to this invention is **characterized in that** in the above invention, the singlet oxygen is generated by irradiating laser light having a peak near 1270 nanometers.

The material producing method according to this invention is **characterized in that** in the above invention, the singlet oxygen is generated by irradiating light having the energy capable of changing at least the oxygen molecule to the singlet oxygen in a state with the material placed in an oxygen atmosphere.

### EFFECT OF THE INVENTION

According to the present invention, light having an energy capable of changing at least an oxygen molecule to singlet oxygen, in a state with the oxygen molecule penetrated into a material, is irradiated to a processing target portion to generate singlet oxygen, and a bond in a molecular structure in the material is broken by the generated singlet oxygen to cause a polymerization reaction or a substitution reaction to change a molecular weight of the material, thereby producing a desired material. Therefore, it is possible to locally change the characteristics of the material using activated oxygen without performing any heat treatment.

### BRIEF DESCRIPTION OF DRAWINGS

FIG. 1 depicts a configuration of a producing apparatus according to an embodiment.
FIG. 2 is an explanatory diagram of a ground state and an excited state of an oxygen molecule.
FIG. 3 is an explanatory diagram of a reaction between a silicone resin and singlet oxygen.
FIG. 4 is an explanatory diagram of an example of a processing target area processed by the producing apparatus depicted in FIG. 1.
FIG. 5 is an explanatory diagram of an example of a processing target area processed by the producing apparatus depicted in FIG. 1.
FIG. 6 depicts a wavelength dependency of strength of a laser beam emitted by a laser diode depicted in FIG. 1.
FIG. 7 depicts another configuration of the producing apparatus according to the embodiment.
FIG. 8 depicts main parts of another configuration of the producing apparatus according to the embodiment.
FIG. 9 is an explanatory diagram of wavelength of a laser beam emitted to a processing target depicted in FIG. 8.
FIG. 10 depicts main parts of another configuration of the producing apparatus according to the embodiment.
FIG. 11 is an explanatory diagram of wavelength of a laser beam emitted to a processing target shown in FIG. 10.
FIG. 12 is a cross-sectional view of a preferred embodiment of an optical module to which a material producing method according to the present invention is applied.
FIG. 13 is an example of a circuit of an optical module shown in FIG. 12.
FIG. 14 is a schematic diagram of a portion X in FIG. 12.
FIG. 15 is an explanatory diagram of a transformation mechanism of a methyl silicone resin.
FIG. 16 is an example in which power of an output optical signal L output from a light outputting portion of a semiconductor laser depicted in FIG. 12 increases as time elapses.
FIG. 17 is an example in which emitted light is output from the semiconductor laser and an optical fiber depicted in FIG. 12 to form an optical waveguide between an end face of a core of a light inputting end of the optical fiber.
FIG. 18 is a cross-sectional view of another configuration of the optical module depicted in FIG. 12.
FIG. 19 is a schematic cross-sectional view of an optical-fiber connection structure according to a first other embodiment of the present invention.
FIG. 20 is an explanatory diagram of an example of a producing method of the optical-fiber connection structure depicted in FIG. 19.
FIG. 21 is a schematic cross-sectional view of an optical-path conversion structure according to a second other embodiment of the present invention.
FIG. 22 is an explanatory diagram of an example of a producing method of the optical-path conversion structure depicted in FIG. 21.
FIG. 23 depicts a dependency on a filler addition amount, of full widths at half maximum θ of an optical radiation far-field pattern of a semiconductor laser sealed with a resin.

### EXPLANATIONS OF LETTERS OR NUMERALS

1, 201 Producing apparatus
2, 21, 22 Laser diode
3 Fiber
4 Radiation tube
5, 205 Controller
6 Input unit
7 Output unit
10 Processing target
215 Oxygen supply mechanism
216 Oxygen supply tube
301 Optical module
302 Main body
303 Ferrule portion
310 Semiconductor laser
320 Transparent resin
330 Optical fiber
3120 First portion (transformed portion of transparent resin)
3130 Second portion (untransformed portion of transparent resin)
3200 Optical waveguide
400 Optical-fiber connection structure
401, 402 Connector ferrule
4011 to 4014, 4021 to 4024 Optical fiber
403 Waveguide film
4031 to 4034 Transformed portion
4035 Untransformed portion
404 Film base material
500 Optical-path conversion structure
501 Optical fiber
502 Prism
503 Light receiving element
504 Waveguide member
5041, 5042 Transformed portion
5043 Untransformed portion
505 Base material

### BEST MODE(S) FOR CARRYING OUT THE INVENTION

Embodiments of the present invention will be explained based on the accompanying drawings below with reference to the drawings. The present invention is not limited by these embodiments. In the drawings, like elements are denoted by like reference numerals.

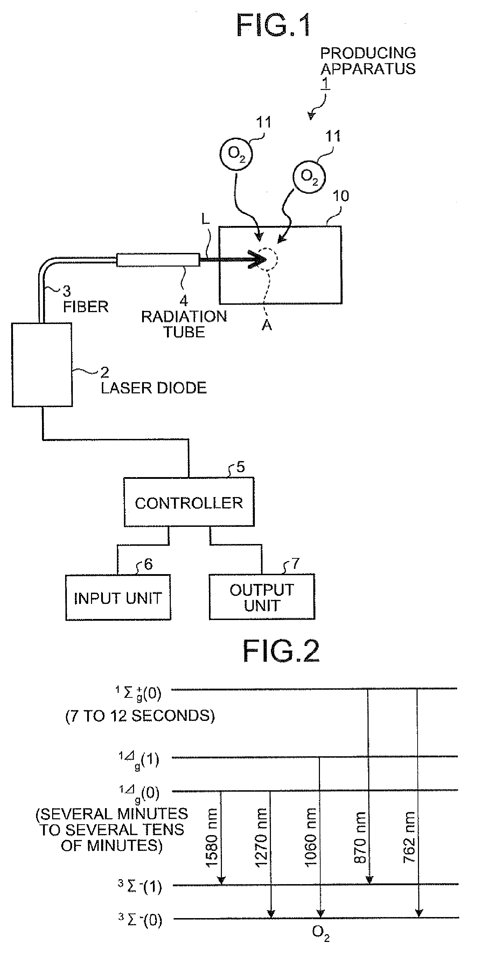

FIG. 1 depicts a configuration of main parts of a producing apparatus according to the present embodiment. As depicted in FIG. 1, a producing apparatus 1 according to the present embodiment includes a laser diode 2 that emits a laser beam with a wavelength of a predetermined band, a fiber 3 that transmits the laser beam emitted by the laser diode 2, a radiation tube 4 having a radiation port for the laser beam transmitted through the fiber 3, a controller 5 that controls structural elements of the producing apparatus 1, an input unit 6 that acquires from outside various pieces of information required in processing operations of the producing apparatus 1, instruction information with regard to producing processes and the like, and an output unit 7 that outputs various pieces of information such as processing results. The controller 5 controls radiation and output of a laser beam by the laser diode 2.

The laser diode 2 emits a laser beam L with a peak at 1270 nanometers, and the laser beam emitted by the laser diode 2 is irradiated to a processing target area A in a processing target 10 via the fiber 3 and the radiation tube 4.

The processing target 10 is a material into which oxygen molecules (O₂) 11 are able to penetrate. In other words, the processing target 10 is not a material like a metal plate, into which gas is unable to penetrate, but is a material having a space into which gaseous oxygen molecules are able to penetrate at least up to the processing target area A between its skeletons. For example, when this material is positioned in the atmosphere, gaseous oxygen molecules are able to penetrate into the material.

An oxygen molecule absorbs a predetermined energy to change from a ground state (triplet oxygen: ³Σ⁻(0)) to singlet oxygen in an excited state. Specifically, as depicted in FIG. 2, energy of 1.63 electron-volts is required to change an oxygen molecule from the ground state to ¹Σ_{g}⁺(0) singlet oxygen having one unpaired electron in an antibonding orbital with its spin direction changed. For example, light having a wavelength of 762 nanometers corresponding to 1.63 electron-volts is irradiated to an oxygen molecule, to excite the oxygen molecule, thereby generating ¹Σ_{g}⁺(0) singlet oxygen.

Further, energy of 0.98 electron-volt is required to change an oxygen molecule from the ground state to singlet oxygen of ¹Δ_{g}(0) having an unpaired electron in an antibonding orbital entering another orbital to form a pair with an unpaired electron having a different spin and present in the another orbital to counteract each other's spin. For example, light having a wavelength near 1270 nanometers corresponding to 0.98 electron-volt is irradiated to a oxygen molecule, to excite the oxygen molecule, thereby generating ¹Δ_{g}(0) singlet oxygen. As indicated by the following chemical reaction formula (a), the ¹Δ_{g}(0) singlet oxygen (¹O₂) is generated by irradiating light having a wavelength of 1270 nanometers to the oxygen molecule (O₂).

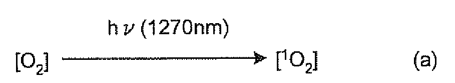

The singlet oxygen is a kind of activated oxygen with high reactivity, which is activated more than a normal oxygen molecule (O₂), and it is possible to change characteristics of a material by using the singlet oxygen, which is the kind of activated oxygen.

Among the ¹Σ_{g}⁺(0) and ¹Δ_{g}(0) singlet oxygen, the life of the ¹Σ_{g}⁺(0) singlet oxygen is as short as 7 to 12 seconds. The life of the ¹Δ_{g}(0) singlet oxygen is remarkably long as several minutes to several tens of minutes. That is, once generated, the ¹Δ_{g}(0) singlet oxygen is able to exist stably for a long period of time of several minutes to several tens of minutes.

In the present embodiment, by generating the ¹Δ_{g}(0) singlet oxygen having a remarkably long life, of the singlet oxygen which is the kind of activated oxygen, the characteristics of the processing target area A in the processing target 10 are changed. That is, the producing apparatus 1 irradiates the laser beam L with a wavelength of 1270 nanometers to the processing target area A from the laser diode 2, in a state with the processing target 10 placed in the atmosphere and oxygen molecules caused to penetrate into the processing target area A. The controller 5 controls output of the laser diode 2 so that the laser beam L reaches the processing target area A in the processing target 10. The controller 5 adjusts a spot diameter of the laser diode 2 so that the laser beam L is irradiated only to the processing target area A in the processing target 10. The controller 5 also controls a laser beam irradiation time of the laser diode 2.

As a result, the oxygen molecules (O₂) that have been penetrated into the processing target area A absorb the energy of the laser beam L with a wavelength of 1270 nanometers to become ¹Δ_{g}(0) singlet oxygen (¹O₂) 12. The ¹Δ_{g}(0) singlet oxygen changes the characteristics of the material of the processing target area A in the processing target 10, to transform only the processing target area A to a desired material.

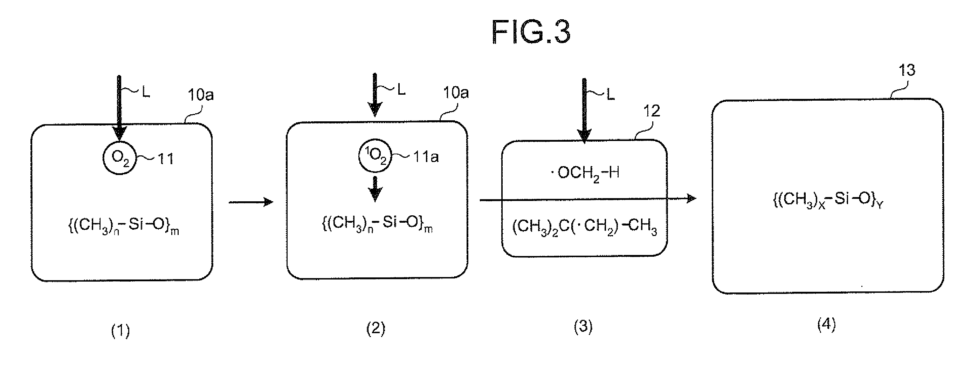

Specifically, a reaction between the processing target 10 and the ¹Δ_{g}(0) singlet oxygen is explained. At first, the reaction is explained with an example in which the processing target 10 is a silicone resin {(CH₃)ₙ-Si-O}ₘ (where n=2) into which gaseous oxygen molecules (O₂) are able to penetrate. As depicted at (1) in FIG. 3, the laser beam L of 1270 nanometers is irradiated to a silicone resin {(CH₃)ₙ-Si-O}ₘ material 10a, which is a processing target, in a state with the oxygen molecules (O₂) 11 penetrated therein. The oxygen molecules (O₂) 11 are excited by absorbing the energy of the laser beam L, and as depicted at (2) in FIG. 3, and converted into ¹Δ_{g}(0) singlet oxygen (¹O₂) 11a. The singlet oxygen (¹O₂) 11a is high in reactivity, and breaks a bond of a methyl (CH₃) group having weak bonding, from among side chains of the silicone resin {(CH₃)ₙ-Si-O}ₘ. Due to a side chain break-off by the singlet oxygen (¹O₂) 11a, an intermediate 12 as shown at (3) in FIG. 3 is generated, and a polymerization reaction or a substitution reaction proceeds between silicone resins to generate a silicone resin {(CH₃)ₓ-Si-O}_{Y} (X=2, Y>m) 13 having a larger molecular weight than the original silicone resin {(CH₃)ₙ-Si-O}ₘ as depicted at (4) in FIG. 3.

The polymerization reaction and the substitution reaction using the singlet oxygen (¹O₂) are explained in more detail, by referring to the following chemical reaction formula (b).

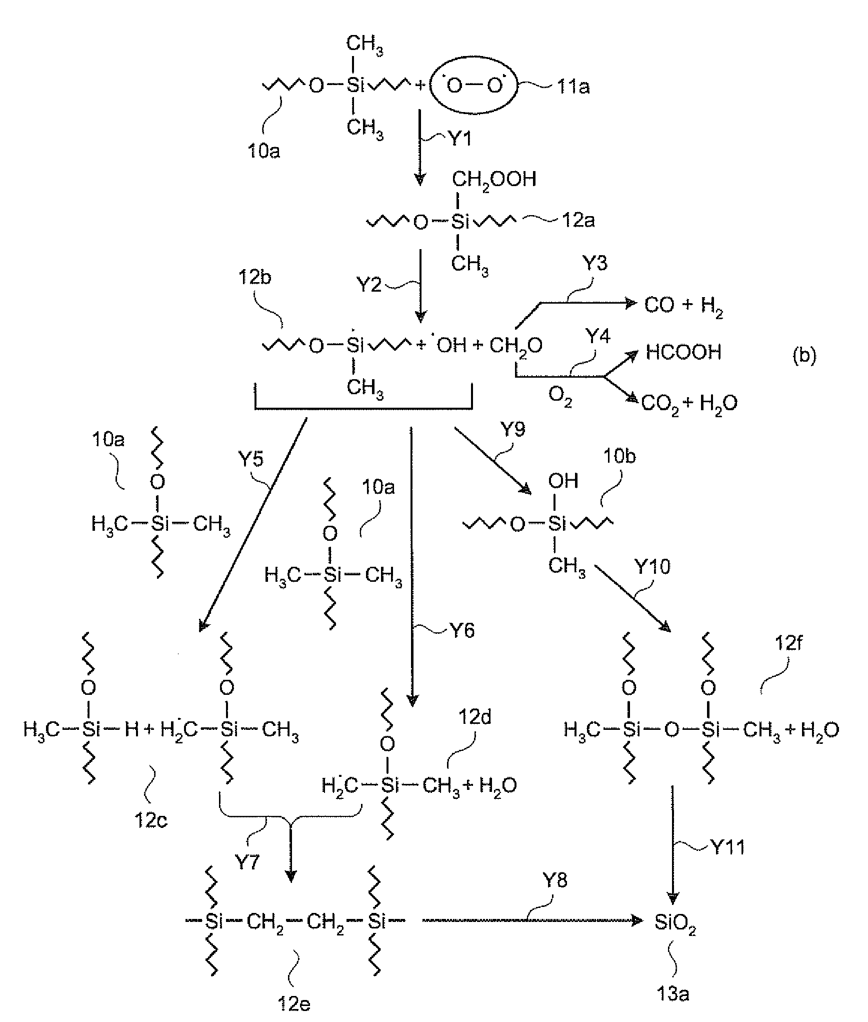

The side-chain methyl group in the silicone resin {(CH₃)ₙ-Si-O}ₘ material 10a that is the processing target reacts with the singlet oxygen (¹O₂) 11a, and as depicted by an arrow Y1, via an intermediate 12a with the position of the reacted methyl group substituted by a CH₂OOH group, as depicted by an arrow Y2, a radicalized intermediate 12b with a bond of the CH₂OOH group broken off, hydroperoxide (•OH), and CH₂O are generated. The CH₂O is separated, as depicted by an arrow Y3, into CO and H₂, and also reacts with O₂ molecules to form HCOOH or to be separated into CO₂ and H₂O, as depicted by an arrow Y4,.

Thereafter, the intermediate 12b and the hydroperoxide (•OH) undergo polymerization with the silicone resin {(CH₃)ₙ-Si-O}ₘ material 10a as depicted by an arrow Y5, to form an intermediate 12e in which the silicone resin {(CH₃)ₙ-Si-O}ₘ material 10a is polymerized as depicted by an arrow Y7, through two kinds of intermediates 12c. Further, the intermediate 12b and the hydroperoxide (•OH) undergo polymerization with the silicone resin {(CH₃)ₙ-Si-0}ₘ material 10a as depicted by an arrow Y6, to form an intermediate 12e in which the silicone resin {(CH₃)ₙ-Si-O}ₘ material 10a is polymerized as depicted by the arrow Y7, through an intermediate 12d and H₂O. Because the intermediate 12e is formed due to the polymerization reaction of the original silicone resin {(CH₃)ₙ-Si-O}ₘ material 10a, it has a larger molecular weight than that of the original silicone resin {(CH₃)ₙ-Si-O}ₘ material 10a.

By repeating the reaction between the intermediate 12e and the singlet oxygen (¹O₂) 11a, the polymerization reaction proceeds, and finally it is possible to generate a vitrified intermediate body in which a methyl group is partially broken off and vitrified silicon oxide (SiO₂) 13a in which all of the methyl groups are broken off, as depicted by an arrow Y8.

Further, after the intermediate 12b and the hydroperoxide (•OH) react with each other to form an intermediate body 10b as depicted by an arrow Y9, the intermediate body 10b is converted to an intermediate 12f and H₂O due to a reaction with the singlet oxygen (¹O₂) 11a as depicted by an arrow Y10. Thereafter, by repeating the reaction between the intermediate 12f and the singlet oxygen (¹O₂) 11a, the polymerization reaction proceeds, and it is possible to finally generate a vitrified intermediate and vitrified silicon oxide (SiO₂) 13a, as depicted by an arrow Y11. The vitrified intermediate and silicon oxide (SiO₂) 13a have smaller molecular weights than that of the original silicone resin {(CH₃)ₙ-Si-O}ₘ material 10a. Due to vitrification, a refractive index of the intermediate and the silicon oxide (SiO₂) 13a becomes higher than the refractive index (1.40) of the original silicone resin {(CH₃)ₙ-Si-O}ₘ material 10a, approaching 1.46.

Thus, the methyl group in the silicone resin {(CH₃)ₙ-Si-O}ₘ material 10a is cleaved by the singlet oxygen (¹O₂) 11a, to cause a polymerization reaction or a substitution reaction, thereby enabling to produce the vitrified intermediate body and silicon oxide.

Further, when a material forming the processing target area A is a methylphenyl resin having a phenyl group, as indicated by the following chemical reaction formula (c), the methyl group having weaker bonding than the phenyl group is broken off by the singlet oxygen (¹O₂), and at the broken position, polymerized with other methylphenyl resins to be vitrified, so that the molecular weight and the refractive index are largely changed from the original material. The ¹Δ_{g}(0) singlet oxygen (¹O₂) does not have the reactivity sufficient to cause break-off of the phenyl group.

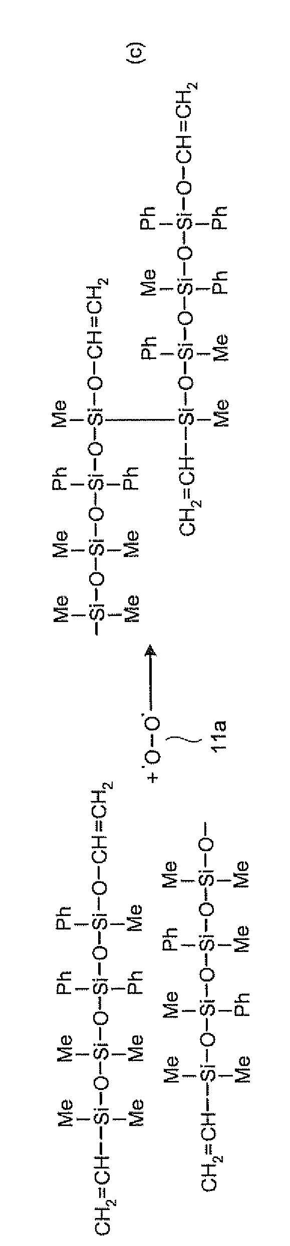

Similarly, when the material forming the processing target area A is a methyl resin, the methyl group is broken off by the singlet oxygen (¹O₂), and at the broken position, polymerized with other methyl resins to be vitrified, so that the molecular weight and the refractive index become larger than those of the original material. The refractive index increases up to near 1.46, and becomes closer to glass. Further, the processing target 10 may not only be the silicone resin described above, but also a resin such as polycarbonate (PC) or polyethylene. It is referable for facilitating generation of the singlet oxygen that the processing target is a material having good transmissibilities of oxygen molecules and light.

As described above, in the present embodiment, the ¹Δ_{g}(0) singlet oxygen is generated by irradiating the laser beam L with a wavelength of 1270 nanometers to the processing target area A from the laser diode 2 in a state with oxygen molecules being penetrated into the processing target area A of the processing target 10. In the present embodiment, further, the bond in the molecular structure in the material of the processing target area A is broken off by the ¹Δ_{g}(0) singlet oxygen, to cause a polymerization reaction or a substitution reaction to change the molecular weight of the material, thereby enabling production of a desired material. That is, in the present embodiment, because it is possible to generate the singlet oxygen by irradiating the laser beam L with a wavelength of 1270 nanometers without performing any heat treatment, transformation of the areas and materials other than the processing target to be changed in the characteristics due to heat treatment, which has conventionally been a problem, is prevented.

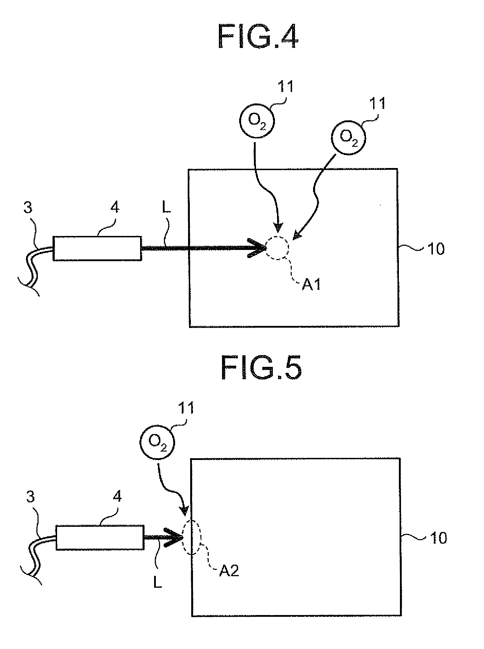

Furthermore, in the present embodiment, it is possible to irradiate the laser beam L to a desired area of the processing target 10 for a desired time period by adjusting the output, an output time period, and a spot diameter of the laser diode 2. Therefore, it is possible to generate the singlet oxygen only in the area irradiated with the laser beam L, to form only the material of the area into a desired material. For example, as depicted in FIG. 4, by irradiating the laser beam L only to an area A1 in the processing target 10, the singlet oxygen is generated only in the area A1 based on the oxygen molecule (O₂) 11 penetrating into the area A1, to transform only the material in the area A1 to a desired material. Further, as depicted in FIG. 5, by irradiating the laser beam L only to a surface area A2 of the processing target 10, the singlet oxygen is generated only at the surface area A2 based on the oxygen molecule (O₂) 11 near the surface area A2, to transform only the material of the surface area A2 to a desired material. Thus, in the present embodiment, by adjusting the output, the output time period, and the spot diameter of the laser diode 2, the characteristics of the material can be locally changed using the singlet oxygen, which is activated oxygen, thereby enabling production of a desired material.

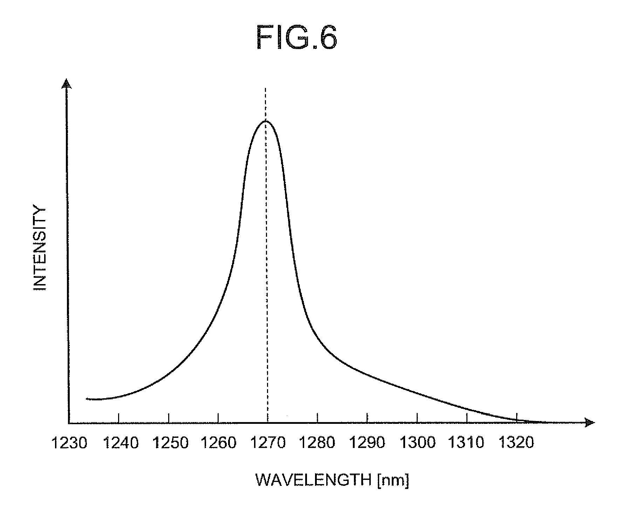

For the present embodiment, a case has been explained in which the laser diode 2 that emits a laser beam with a wavelength with a peak at 1270 nanometers is used. However, the laser beam emitted by the laser diode 2 actually has a full width at half maximum of about ± 10 nanometers, as depicted in FIG. 6. Depending on a laser diode, a full width at half maximum may be about ± 30 nanometers. The energy required to form the ¹Δ_{g}(0) singlet oxygen has a width centering on 0.98 electron-volt depending on a distance between atoms in the O₂ molecule and the entire spin state. Therefore, the fact that the laser beam has the full width at half maximum of about ± 10 nanometers to ± 30 does not hinder facilitation of forming the singlet oxygen from the oxygen molecules.

Further, the present embodiment has been explained with an example in which light having a wavelength with a peak at 1270 nanometers is used. However, the peak is not limited to 1270 nanometers, and light having a wavelength near 1270 nanometers having an intensity capable of forming the singlet oxygen from the oxygen molecules needs only to be included, and particularly, light having a wavelength of 1268.7 nanometers is preferable. Further, the present embodiment has been explained with an example in which a laser beam with a narrowed down light flux is used to change only the oxygen molecules having penetrated into the processing area into the singlet oxygen accurately and efficiently. However, something other than the laser beam can be used.

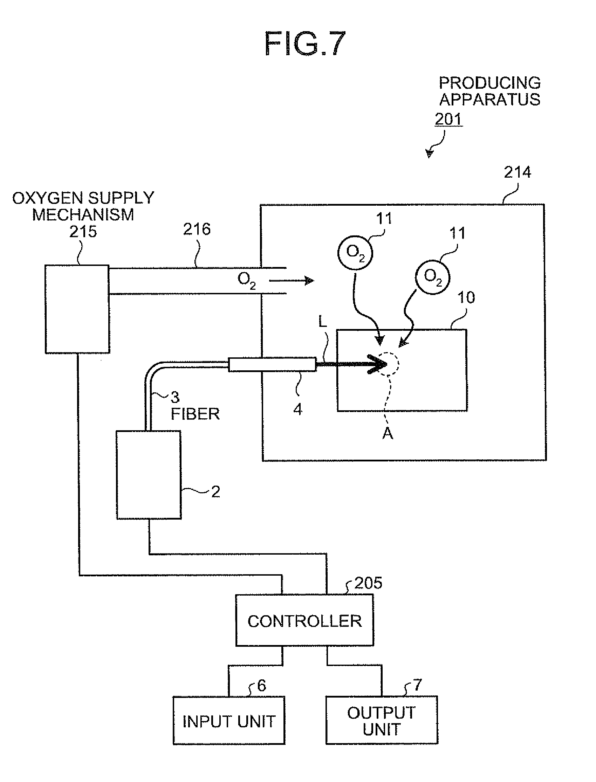

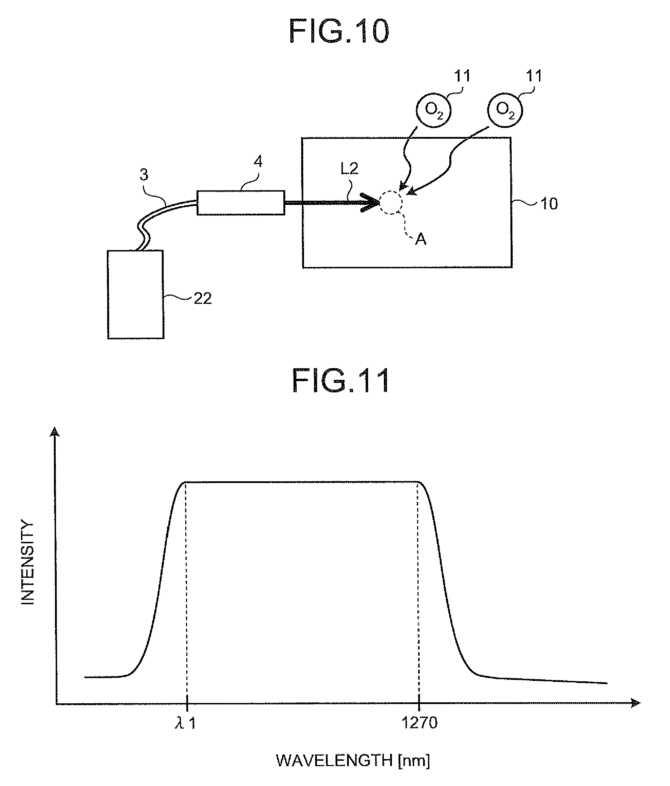

While the producing apparatus 1 in which the processing target 10 is positioned in the atmosphere has been exemplified as the producing apparatus according to the present embodiment, as depicted in FIG. 7, a producing apparatus 201 in which the processing target 10 is positioned in an oxygen atmosphere may be used to efficiently form the singlet oxygen from the oxygen molecules. As shown in FIG. 11, the producing apparatus 201 has a configuration in which the processing target 10 can be placed in the oxygen atmosphere in a container 214 into which oxygen is supplied from an oxygen supply mechanism 215 via an oxygen supply tube 216. A controller 205 controls oxygen supply at the oxygen supply mechanism 215 as well as other structural parts. In this case, the oxygen molecules (O₂) 11 are supplied to the surface of the processing target 10 and into the processing target 10 with a higher concentration than in a case in which the processing target 10 is arranged in the atmosphere, thereby enabling to generate the singlet oxygen more efficiently.

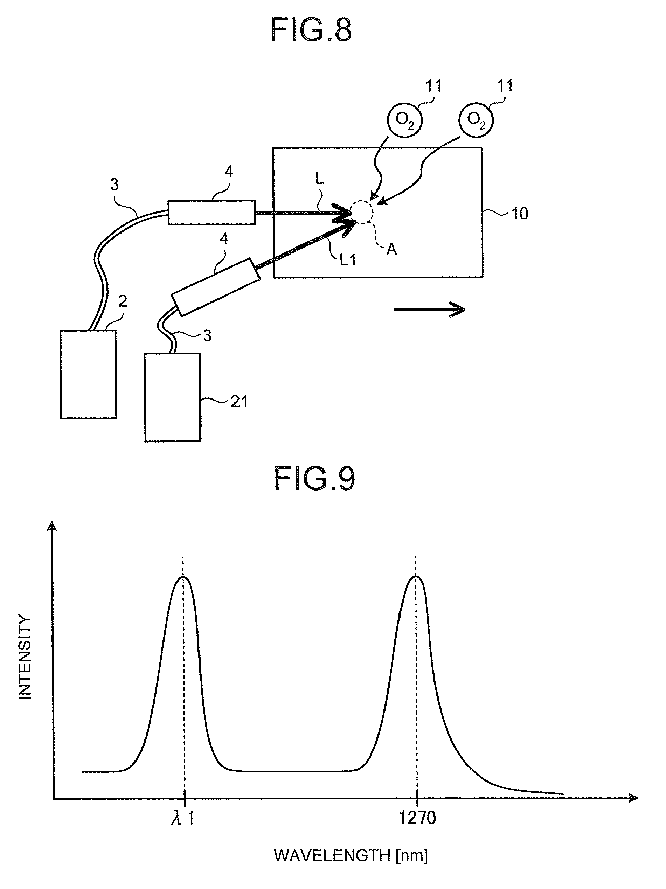

Further, the ¹Δ_{g}(0) singlet oxygen is able to break off a group having weak bonding such as a methyl group, but unable to break off a group having strong bonding such as a phenyl group. Therefore, as depicted in FIG. 8, a desired material may be produced by irradiating a laser beam L1 having a wavelength with an energy capable of breaking off a group to be broken off other than the methyl group, together with the laser beam L of 1270 nanometers required to form the singlet oxygen, to break the group to be broken off other than the methyl group, and causing polymerization or substitution using the generated singlet oxygen at a position where the group other than the methyl group has been broken off. In this case, a laser diode 21 that emits the laser beam L1, the fiber 3 that transmits the laser beam L emitted by the laser diode 21, and the radiation tube 4 having a radiation port for the laser beam transmitted through the fiber 3 may be provided in addition to the laser diode 2 that emits the laser beam L of 1270 nanometers, as structural components of the producing apparatus 1. The wavelength of the laser beam emitted by the laser diode 21 is a wavelength λ1 on a short wavelength side having a higher energy than 1270 nanometers corresponding to the strength of bonding of the group to be broken off. The producing apparatus 1 is able to break off the group to be broken off to cause polymerization or substitution at the broken off position using the generated singlet oxygen, thereby enabling production of a desired material, in a case in which a laser diode 22 that emits a laser beam L2 including the wavelength of 1270 nanometers and the wavelength λ1 is provided, as depicted in FIG. 10, instead of the laser diode 2 depicted in FIG. 1, as well as in the configuration in which the laser diode 21 that emits the laser beam L1 is further provided. As depicted in FIG. 11, the laser beam L2 becomes broad including both the wavelength of 1270 nanometers and the wavelength λ1.

Application examples of a material producing method according to the present embodiment includes a tape removing method in which an interface on a semiconductor tape is formed into silica by generating singlet oxygen to reduce its adhesion, a method of transforming a surface by forming a joint of different materials and an adhered portion into silica by generating singlet oxygen, and a method of improving strength of an adhesive interface.

In the present embodiment, a solid such as a silicone resin is explained as an example of the processing target 10. However, the present invention is also applicable to a powdery material or a semi-solid-phase state material. Further, the present invention is applicable to a liquid material or gaseous material, because a laser beam including a wavelength of 1270 nanometers can be irradiated to oxygen molecules dissolved in a liquid or oxygen molecules present in the gas to form the singlet oxygen. Needless to mention, the processing target can be not only a single material but also a plurality of materials. When the processing target area spans over a plurality of materials, a laser beam including a wavelength of 1270 nanometers can be irradiated to the processing target area to generate singlet oxygen and cause a polymerization reaction or a substitution reaction, thereby producing a desired material.

Further, the present embodiment has been explained with an example in which ¹Δ_{g}(0) singlet oxygen is generated as the singlet oxygen (¹O₂) 12. However, the singlet oxygen (¹O₂) 12 is not limited to ¹Δ_{g}(0) singlet oxygen. For example, if ¹Σ_{g}⁺(0) singlet oxygen is to be generated, a singlet oxygen producing apparatus may just include a laser diode that is able to emit a laser beam including at least a wavelength of 762 nanometers corresponding to 1.63 electron-volts instead of the laser diode 2, so that a laser beam including at least the wavelength of 762 nanometers is emitted to oxygen molecules, thereby generating Σ_{g}⁺(0) singlet oxygen. Further, if ¹Δ_{g}(1) singlet oxygen depicted in FIG. 2 is to be generated, a singlet oxygen producing apparatus may just include a laser diode that is able to emit a laser beam including at least a wavelength of 1060 nanometers instead of the laser diode 2, so that a laser beam including at least the wavelength of 1060 nanometers is emitted to oxygen molecules, thereby generating ¹Δ_{g}(1) singlet oxygen. Thus, the wavelength of the laser beam to be irradiated may be selected depending on the singlet oxygen to be generated. That is, in the present embodiment, a laser diode that emits light having at least an energy capable of forming the singlet oxygen from the oxygen molecules is provided, and light having at least the energy capable of forming the singlet oxygen from the oxygen molecules is emitted to the oxygen molecules, thereby enabling generation of the oxygen molecules to be generated.

Further, an example in which the material producing method according to the present embodiment is applied to a case in which irradiation conditions of emitted light output from a semiconductor laser and an optical fiber are adjusted to positively transform a part of a transparent resin (a first portion near a light outputting portion of the semiconductor laser), to which light is irradiated, so that the part of the transformed transparent resin forms an optical waveguide or a lens for guiding the emitted light of the semiconductor laser to the optical fiber is explained.

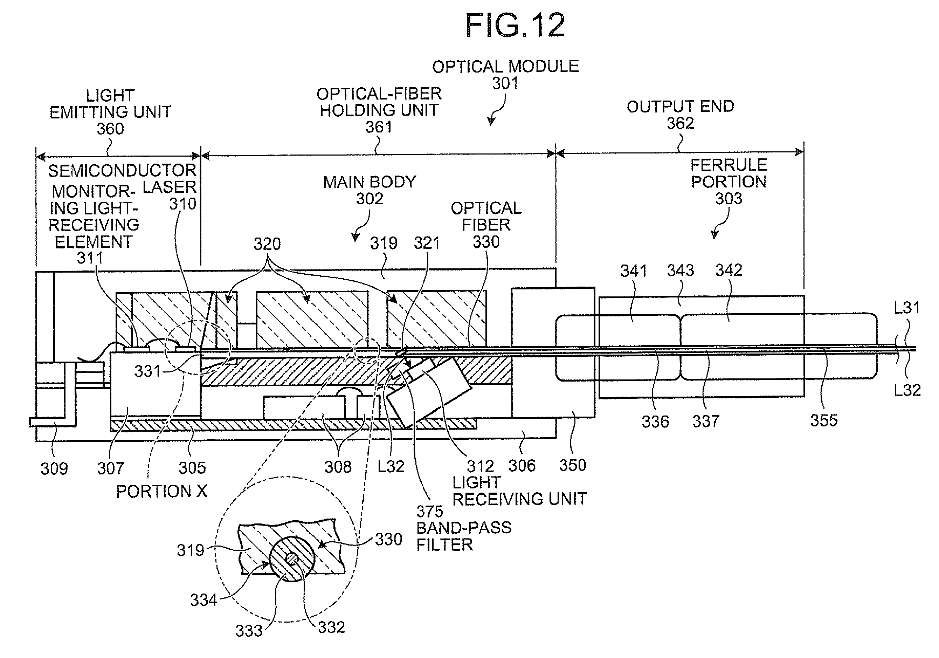

FIG. 12 is a cross-sectional view of a configuration of an optical module to which the material producing method according to the present embodiment is applied. The optical module depicted in FIG. 12 is an optical transmitting and receiving module for example, and in the example of FIG. 12, an output optical signal L31 is transmitted and an input optical signal L32 can be received.

An optical module 301 depicted in FIG. 12 schematically includes a main body 302 and a ferrule portion 303. The structure of the main body 302 is explained first.

The main body 302 depicted in FIG. 12 includes a substrate 305, a semiconductor laser 310, a monitoring light-receiving element 311, a light receiving unit 312, a transparent resin 320, and an optical fiber 330.

The substrate 305 is, for example, a metal lead frame member, and arranged on a base member 306 having insulation properties. A light emitting substrate 307 and an input optical-signal processor 308 for received light are mounted on the substrate 305. The light emitting substrate 307 is, for example, a silicon substrate.

The semiconductor laser 310 and the monitoring light-receiving element 311 are mounted on the light emitting substrate 307, and the semiconductor laser 310 and the monitoring light-receiving element 311 are electrically connected to an external circuit via an external connection terminal 309.

As the semiconductor laser 310, for example, a laser diode (LD) chip such as a Fabry-Perot laser diode (FPLD) or an edge emitting laser may be used, and the semiconductor laser 310 outputs an output optical signal (upstream signal) L31 having a wavelength of, for example, 1310 nanometers and including a wavelength of 1270 nanometers. The monitoring light-receiving element 311 monitors optical output of the output optical signal L31 generated by the semiconductor laser 310. The monitoring light-receiving element 311 is, for example, a photodiode.

The light receiving unit 312 depicted in FIG. 12 receives an input optical signal L32 input through the optical fiber 330. The light receiving unit 312 is, for example, a photodiode. A wavelength division multiplexing (WDM) filter 321 is arranged in the middle of the optical fiber 330, and the input optical signal L32 entering through the optical fiber 330 is reflected by the WDM filter 321 and enters the light receiving unit 312. The WDM filter 321 has a function of allowing the output optical signal L31 to pass therethrough and selectively reflecting the input optical signal L32. The input optical signal (downstream signal) L32 has a wavelength of, for example, 1550 nanometers or 1490 nanometers.

The optical fiber 330 depicted in FIG. 12 forms an optical waveguide in the optical module 301.

A light inputting end 331 of the optical fiber 330 is arranged correspondingly with a light outputting portion of the semiconductor laser 310. The optical fiber 330 has a core 332 and a clad 333 surrounding the core 332. The optical fiber 330 is fitted in a groove 334 having a Ω-shape cross section of a resin molded body 319, and the light inputting end 331 of the optical fiber 330 is positioned and held with respect to the light outputting portion of the semiconductor laser 310 highly accurately.

As the transparent resin 320 depicted in FIG. 12, for example, a silicone resin may be used. "Silicone resin" is a generic name for a macromolecular organic compound (polymer) having a siloxane bond skeleton, which is colorless, odorless, and water-repellent. The silicone resin is explained below as an example of the transparent resin 320.

As depicted in FIG. 12, the semiconductor laser 310, the monitoring light-receiving element 311, a part of the optical fiber 330, and the light receiving unit 312 are sealed and protected by the transparent resin 320. The resin molded body 319 is further arranged at the transparent resin 320. A holder 350 of the main body 302 holds a mid part of the optical fiber 330 and the ferrule portion 303.

The structure of the ferrule portion 303 is explained next. The ferrule portion 303 has two ferrules 341 and 342, and a sleeve 343. The ferrule 341 directly connects the other end 336 of the optical fiber with an end 337 of another optical fiber 355 for connection.

As depicted in FIG. 12, the optical module 301 can be divided into regions including a light emitting unit 360, an optical-fiber holding unit 361, and an output end 362. The light emitting unit 360 is a region including the semiconductor laser 310 and the monitoring light-receiving element 311, and the optical-fiber holding unit 361 is a region holding the optical fiber 330 with the transparent resin 320. The output end 362 is a region including the holder 350 and the ferrule portion 303.

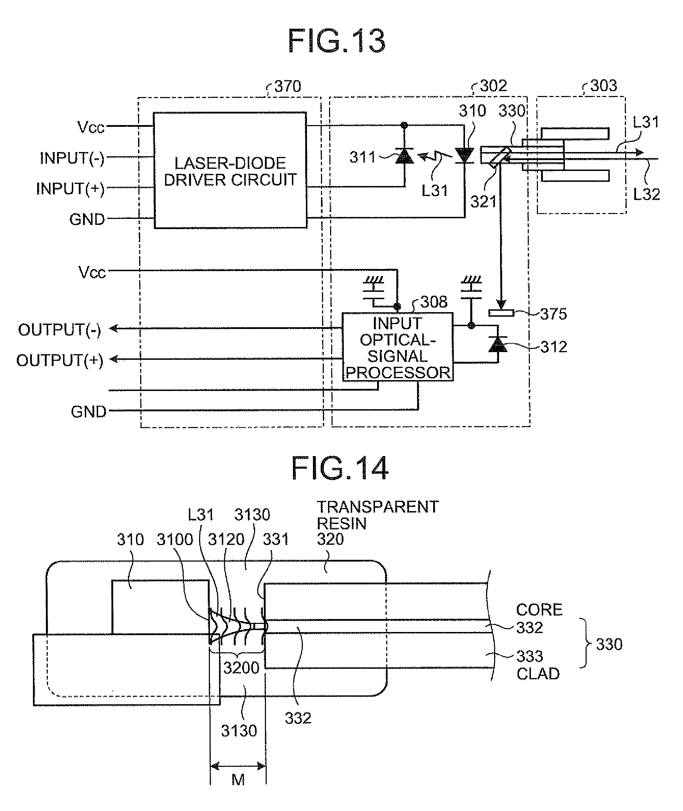

FIG. 13 is an example of a circuit of the optical module 301 depicted in FIG. 12.

FIG. 13 depicts the optical fiber 330, the semiconductor laser 310, the monitoring light-receiving element 311, the light receiving unit 312, the input optical-signal processor 308 for the input optical signal L32, and a laser-diode driver circuit 370.

The laser-diode driver circuit 370 supplies driving current to the semiconductor laser 310, thereby driving the semiconductor laser 310. The driven semiconductor laser 310 generates an output optical signal L31. The generated output optical signal L31 is transmitted to a counterpart through the optical fiber 330.

Further, the output optical signal L31 generated by the semiconductor laser 310 is received by the monitoring light-receiving element 311. The laser-diode driver circuit 370 monitors an optical signal output of the output optical signal L31 received by the monitoring light-receiving element 311, thereby outputting the output optical signal L31 having a certain optical signal output.

The input optical signal L32 at a light receiving end is transmitted from the counterpart through the optical fiber 330, reflected by the WDM filter 321, passes through a band-pass filter 375, and then enters the light receiving unit 312. The received input optical signal L32 undergoes a predetermined process by the input optical-signal processor 308. The band-pass filter 375 allows the input optical signal having only wavelengths of 1480 nanometers to 1500 nanometers to pass therethrough.

FIG. 14 is a schematic diagram of a portion X in FIG. 12. The portion X represents the semiconductor laser 310, the light inputting end 331 of the optical fiber 330, and a part of the transparent resin 320. The transparent resin 320 is filled between the semiconductor laser 310 and the optical fiber 330, and the semiconductor laser 310 and the optical fiber 330 are sealed with the transparent resin 320.

In FIG. 14, a distance M between the semiconductor laser 310 and the light inputting end 331 of the optical fiber 330 is, for example, 15 micrometers. The optical power of the output optical signal L31 from the semiconductor laser 310 is, for example, 10 mW.

In the optical module 301 depicted in FIG. 12, when the semiconductor laser 310 is driven to generate the output optical signal L31, which is the emitted light from the semiconductor laser 310 including a wavelength of 1270 nanometers, the singlet oxygen is efficiently generated by adjusting the irradiation conditions of the emitted light, thereby transforming a first portion 3120 of the transparent resin 320 near a light outputting portion 3100 of the semiconductor laser 310. Accordingly, a crosslink density of a main chain of the silicone resin is increased to harden the resin.

Due to this increase in the resin density of the first portion 3120, the refractive index of the first portion 3120 of the transparent resin 320 near the light outputting portion 3100 becomes higher than that of a second portion 3130 of the transparent resin 320 other than the portion near the light outputting portion 3100, and thus it is possible to form an optical waveguide 3200 that guides the emitted light of the semiconductor laser 310 to the light inputting end 331 of the optical fiber 330.

That is, because the wavelength of the emitted light from the semiconductor laser 310 includes a wavelength region that transforms oxygen to a singlet excited state (a wavelength region of 1270 nanometers or less), the oxygen molecules in the atmosphere are activated by the energy of the emitted light and changed from a triplet excited state to the singlet excited state, so that the singlet oxygen in the singlet excited state reacts with the methyl silicone resin having a methyl group in its side chain.

In other words, in the silicone resin, oxygen is activated (is changed from the triplet state to the singlet state), a radical reaction occurs depending on circumstances to cut off a low-molecular side chain such as a methyl group, and the main chain is polymerized.

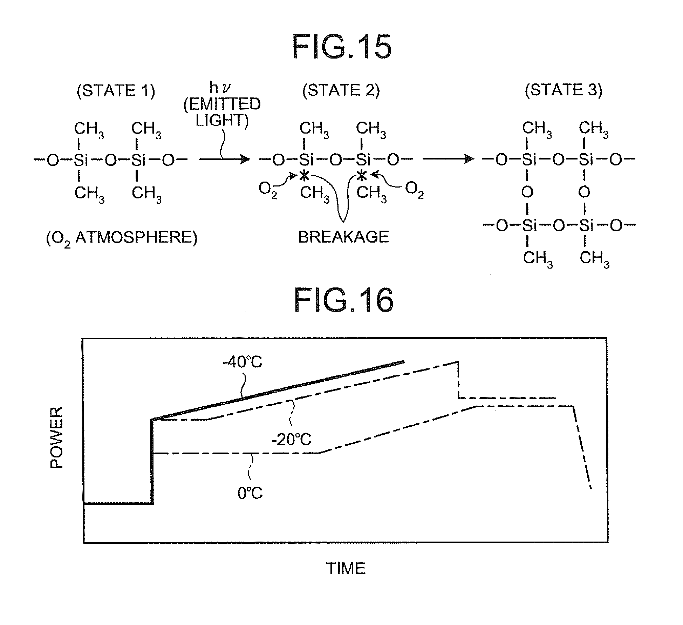

The polymerization reaction of the silicone resin in the presence of the singlet oxygen is specifically explained with reference to FIG. 15. FIG. 15 is an explanatory diagram of a transformation mechanism of the methyl silicone resin. As depicted in FIG. 15, in an oxygen atmosphere, when the emitted light having a wavelength satisfying the wavelength region of 1270 nanometers or less is output from the semiconductor laser 310 to a methyl silicone resin having the methyl group in the side chain (a state 1), the side chain, which is the methyl group, is cut off and bonded with oxygen in the singlet excited state (a state 2), and the main chain is polymerized (a state 3). As a result, because the resin density of the first portion 3120 increases and the refractive index of the first portion 3120 of the transparent resin 320 near the light outputting portion 3100 becomes higher than that of the second portion 3130 of the transparent resin 320 other than the portion near the light outputting portion 3100, the optical waveguide 3200 that guides the emitted light of the semiconductor laser 310 to the light inputting end 331 of the optical fiber 330 is formed.

The efficiency of forming the optical waveguide 3200 may be improved by restricting the irradiation conditions of the emitted light. The irradiation conditions of the emitted light include at least the wavelength of the emitted light, the ambient temperature, and the irradiation time period of the emitted light. The wavelength of the emitted light and the ambient temperature are adjusted so that intensity of the wavelength region (1270 nanometers) that activates oxygen is increased in the atmosphere including at least the oxygen molecules.

A relation between the wavelength of the emitted light from the semiconductor laser 310 depicted in FIG. 12 and the ambient temperature is explained with reference to FIG. 16.

FIG. 16 is an example in which the power of the output optical signal L31 output from the light outputting portion 3100 of the semiconductor laser 310 increases as time elapses. In FIG. 16, cases in which the ambient temperature (also referred to as environmental temperature) is 0°C, -20°C, and -40°C is shown.

As depicted in FIG. 16, as the ambient temperature decreased, the power of the output optical signal L31 increased versus time period. This is because when the ambient temperature is 0°C, the wavelength of the output optical signal L31 is near 1290 nanometers, when the ambient temperature is -20°C, the wavelength of the output optical signal L31 is near 1280 nanometers, and when the ambient temperature is -40°C, the wavelength of the output optical signal L31 is near 1270 nanometers.

Because the wavelength of the output optical signal L31 output from the semiconductor laser 310 has a certain range, when the ambient temperature is 0°C, that is, even when the wavelength of the output optical light L31 is near 1290 nanometers, the wavelength includes a wavelength of 1270 nanometers or less at which oxygen is activated. However, the distributed amount is smaller than that of when the ambient temperature is -40°C, and thus an increase in the resin density due to the transformation of the first portion 3120 of the transparent resin 320 is small. Accordingly, as the ambient temperature decreased, the power of the output optical light L31 increased versus time period.

As depicted in FIG. 16, it can be seen that a change in the power of the output optical signal L31 is not constant versus time period depending on the ambient temperature. Accordingly, the irradiation time period of the emitted light that achieves the optimum optical coupling efficiency, i.e., the irradiation time period of the emitted light in which the power becomes maximum is adjusted according to the ambient temperature, thereby increasing the resin density due to the transformation of the first portion 3120 of the transparent resin 320.

As depicted in FIGS. 12 and 14, upon the semiconductor laser 310 outputting the output optical signal L31 having a wavelength of 1310 nanometers, the radiation time period is adjusted and the ambient temperature is set lower than the room temperature, so that it is possible to change a peak wavelength of the laser beam from 1310 nanometers to 1270 nanometers. Accordingly, the peak wavelength of the laser beam can be set to 1270 nanometers by emitting the laser beam from the semiconductor laser 310 under the ambient temperature lower than the room temperature, and the first portion 3120 of the transparent resin 320 can be efficiently transformed to increase the resin density by the output optical signal L31 corresponding to the laser beam with a wavelength of 1270 nanometers.

Thus, by emitting the laser beam including the wavelength of 1270 nanometers from the semiconductor laser 310, the semiconductor laser 310 is optically coupled directly with an end face of the core 332 of the light inputting end 331 of the optical fiber 330 through the optical waveguide 3200 of the transparent resin 320, and the optical waveguide 3200 for guiding the emitted light from the semiconductor laser 310 to the light inputting end 331 of the optical fiber 330 is formed, thereby increasing the optical coupling efficiency.

That is, by increasing the resin density of the first portion 3120 of the transparent resin 320 near the light outputting portion 3100 of the semiconductor laser 310, the first portion 3120 of the transparent resin 320 near the light outputting portion 3100 can be referred to as a transformed portion of the transparent resin 320 transformed by the optical signal L31, and the second portion 3130 of the transparent resin 320 other than the portion near the light outputting portion 3100 can be referred to as an untransformed portion of the transparent resin 320. Because the refractive index of light in the transformed portion is higher than that of light in the untransformed portion, and there is a difference in the refractive indices of light between the transformed portion and the untransformed portion, the transparent resin 320 can form the optical waveguide 3200 between the light outputting portion 3100 of the semiconductor laser 310 and the end face of the core 332 of the light inputting end 331 of the optical fiber 330 by using the difference in the refractive indices.

In the transparent resin 320, the refractive index of the first portion 3120 of the transformed portion between the light outputting portion 3100 of the semiconductor laser 310 and the end face of the core 332 of the light inputting end 331 of the optical fiber 330 is made higher than that of the second portion 3130. Therefore, the irradiation conditions of the emitted light output from the semiconductor laser 310 are adjusted to set the peak wavelength of the emitted light to 1270 nanometers, thereby generating the singlet oxygen efficiently and promoting the polymerization reaction of the silicone resin. Accordingly, the difference in the refractive indices between the transformed portion (the first portion 3120) and the untransformed portion (the second portion 3130) increases, and the optical waveguide 3200 in the transparent resin 320 can be formed.

For example, the singlet oxygen can be efficiently generated if the atmosphere in which the optical module 301 is placed has a temperature lower than the room temperature. Therefore, the difference in the refractive indices between the transformed portion (the first portion 3120) and the untransformed portion (the second portion 3130) increases, and the optical waveguide in the transparent resin 320 can be infallibly formed.

When the semiconductor laser 310 is driven to generate the emitted light from the semiconductor laser 310 for the transparent resin 320, the singlet oxygen can be efficiently generated by setting the peak wavelength of the emitted light to 1270 nanometers. Accordingly, the transparent resin 320 is transformed, and the optical waveguide effects are achieved that the crosslink density of the main chain of the silicone resin is increased and the resin is hardened.

Further, because the transparent resin 320 of the optical module 301 according to the present invention is the silicone resin, which is readily available and easily processed, sealing between the semiconductor laser 310 and the optical fiber 330 can be performed infallibly and easily.

Because the singlet oxygen can be efficiently generated even at the room temperature by specifying the peak wavelength of 1270 nanometers of the emitted light output from the semiconductor laser 310 by using a distributed feedback semiconductor laser (DFB-LD) as an LD chip of the semiconductor laser 310, the optical waveguide 3200 in the transparent resin 320 can be smoothly formed.

The present invention is not limited to the above embodiment and various modifications can be carried out.

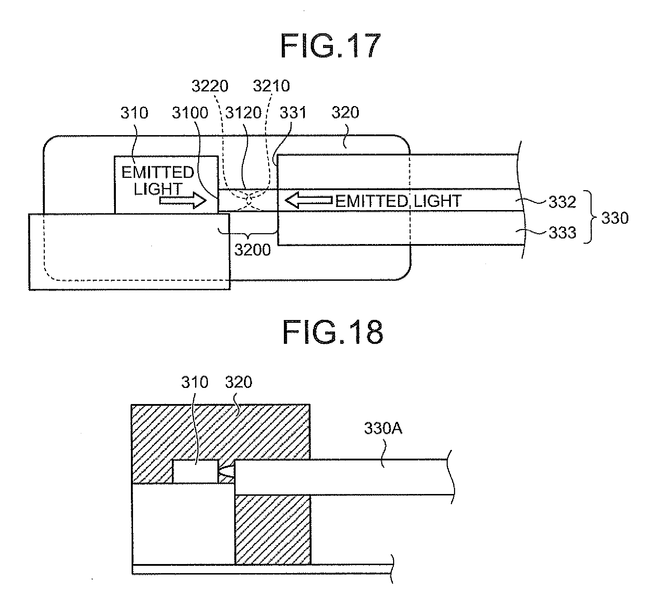

In the example of the optical module depicted in FIGS. 12 and 14, the singlet oxygen is generated by the emitted light including the wavelength of 1270 nanometers output from the semiconductor laser 310, to transform the first portion 3120 of the transparent resin 320, thereby forming the optical waveguide 3200 between the light outputting portion 3100 of the semiconductor laser 310 and the end face of the core 332 of the light inputting end 331 of the optical fiber 330. However, as depicted in FIG. 17, by outputting the emitted light including the wavelength of 1270 nanometers not only from the semiconductor laser 310 but also from the core 332 of the optical fiber 330, the optical waveguide 3200 can be formed between the end face of the core 332 of the light inputting end 331 of the optical fiber 330.

That is, a boundary of a transformed portion 3210 of the transparent resin 320 due to the emitted light continuously approaches the end face of the core 332 of the optical fiber 330 from the semiconductor laser 310 end, and a boundary of a transformed portion 3220 of the transparent resin 320 due to the emitted light including the wavelength of 1270 nanometers continuously approaches the light outputting portion 3100 of the semiconductor laser 310 from the optical fiber 330 end. Accordingly, the transformed first portion 3120 of the transparent resin 320 including at least the transformed portion 3210 and the transformed portion 3220, which becomes the optical waveguide 3200, can be formed between the light outputting portion 3100 of the semiconductor laser 310 and the end face of the core 332 of the light inputting end 331 of the optical fiber 330 within a short period of time.

For example, the example of the optical module depicted in FIG. 12 is an optical transmission and reception module capable of transmitting and receiving an optical signal, but the optical module is not limited thereto, and may instead be an optical transmission module that is capable of transmitting an optical signal.

Further, the optical module 301 depicted in FIG. 12 generates and outputs the output optical signal L31 via the optical fiber 330, and is able to receive the input optical signal L32 input via the optical fiber 330. However, the present invention is not limited thereto, and is applicable to a configuration, as depicted in FIG. 18, in which the optical module 301 includes the semiconductor laser 310 and an optical fiber 330A which is an optical waveguide, the semiconductor laser 310 and the optical fiber 330A are optically coupled directly with each other, and the transparent resin 320 is filled in between the semiconductor laser 310 and the optical fiber 330A. The kind of the transparent resin 320 is not limited to a silicone resin, and other kinds of resins can be adopted.

### (First Other Embodiment)

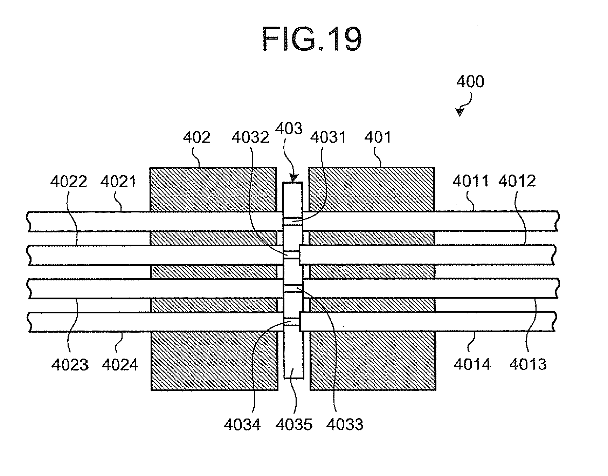

Another embodiment of the present invention is explained next. FIG. 19 is a schematic cross-sectional view of an optical-fiber connection structure according to a first other embodiment of the present invention. In an optical-fiber connection structure 400, a connector ferrule 401 and a connector ferrule 402 are connected with each other, facing each other with a waveguide film 403 therebetween. In each of the connector ferrules 401 and 402, four optical fibers 4011 to 4014 or 4021 to 4024 respectively arranged in an array are inserted and fixed. The connector ferrules 401 and 402 are fixed to each other by a latch structure (not illustrated), a clip, or the like. An optical waveguide including transformed portions 4031 to 4034 made of, for example, silicon oxide, and an untransformed portion 4035 made of, for example, a silicone resin having a refractive index lower than that of the transformed portions 4031 to 4034, is formed in the waveguide film 403. The optical fiber 4011 and the optical fiber 4021 arranged opposite to each other are optically connected with each other by the optical waveguide formed of the transformed portion 4031 and the untransformed portion 4035. Other optical fibers facing each other are optically connected as well by the respectively corresponding optical waveguides. Because the refractive indices of the transformed portions 4031 to 4034 is close to 1.46, and conforms to indices of the optical fibers 4011 to 4014 and 4021 to 4024, reflection at an interface between the transformed portion and the optical fiber is suppressed to be extremely small.

In the optical-fiber connection structure 400, because the optical waveguide is formed in the waveguide film 403, even if the waveguide film 403 is thick, a connection loss does not increase, as compared with a case of using a conventional refractive index matching agent or refractive index matching sheet. Further, because the waveguide film 403 has flexibility, the space between the end faces of the optical fibers can be filled up by the waveguide film 403 regardless of variation in distances between the end faces of the optical fibers facing each other due to variation in positions of the end faces of the optical fibers. Further, the optical fibers can be connected with each other with a low connection loss due to the effects of the optical waveguide described above, even if the distances between the end faces of the optical fibers are large. For example, when the distances between the end faces of the optical fibers are about 1 to 200 micrometers, the space can be filled up by using the waveguide film 403 having a thickness corresponding to the distance, and a low connection loss can be realized. In other words, in the optical-fiber connection structure 400, even if machining accuracy of the end faces of the optical fibers is low, that is, even if there is variation in the positions of the end faces or polishing accuracy of the end faces is low, the low connection loss can be realized, and thus the optical-fiber connection structure 400 can be produced with low cost.

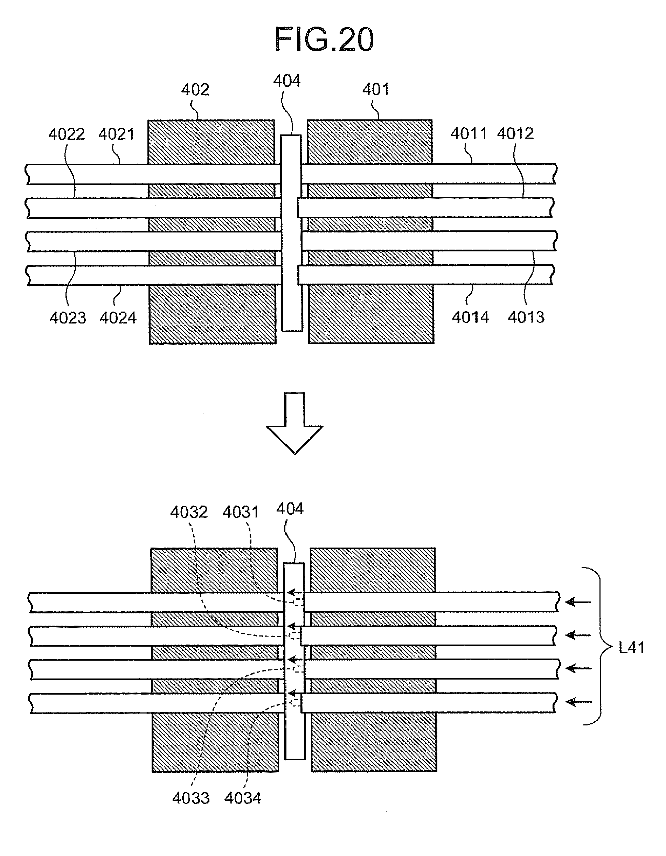

The optical-fiber connection structure 400 may be produced as described below. FIG. 20 is an explanatory diagram of an example of a producing method of the optical-fiber connection structure depicted in FIG. 19. As depicted in FIG. 20, the connector ferrules 401 and 402 into which the optical fibers 4011 to 4014 and 4021 to 4024 are inserted and fixed are prepared, and these are connected so that they face each other and fixed with a film base material 404 made of a silicone resin having a thickness of about 1 to 200 micrometers placed between them. A laser beam L41 including the wavelength of 1270 nanometers is input from each end of the optical fibers 4011 to 4014 by using an array light source or the like. Because the laser beam L41 is output from the other ends of the optical fibers 4011 to 4014 in contact with the film base material 404, a polymerizing reaction or the like occurs due to generation of the singlet oxygen in the film base material 404, and the transformed portions 4031 to 4034 made of silicon oxide are gradually formed, thereby forming the optical waveguide. As a result, the film base material 404 finally becomes the waveguide film 403, and the optical-fiber connection structure 400 is completed.

The laser beam L41 may be input from each of the optical fibers 4021 to 4024, or input from both sides of the optical fibers 4011 to 4014 and the optical fibers 4021 to 4024. The material of the waveguide film 403 and the film base material 404 is not limited to a silicone resin, and may be another resin such as PC or polyethylene.

### (Second Other Embodiment)

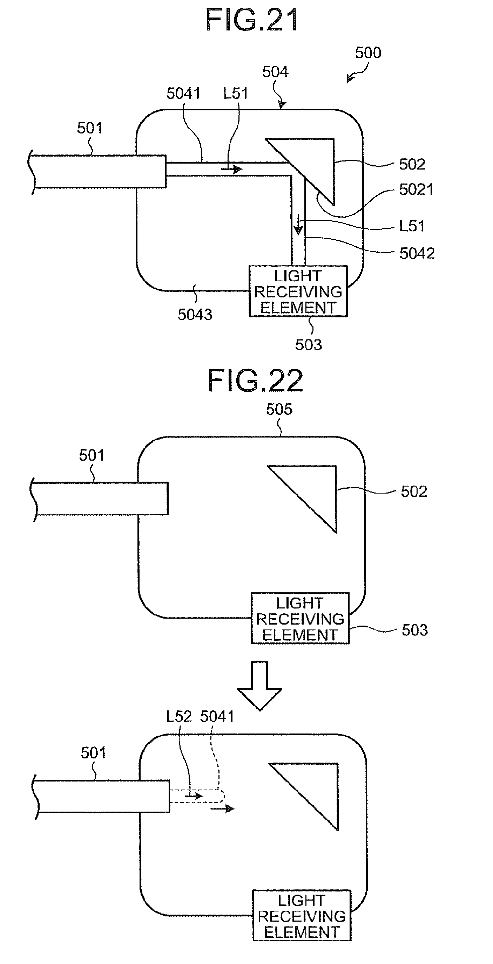

Still another embodiment of the present invention is explained next. FIG. 21 is a schematic cross-sectional view of an optical-path conversion structure according to a second other embodiment of the present invention. An optical-path conversion structure 500 includes an optical fiber 501, a prism 502 such as a triangular prism having a reflecting surface which is a reflecting means with an increased reflectivity increased by gold deposition, a light receiving element 503 such as a photodiode, and a waveguide member 504. An optical waveguide including transformed portions 5041 and 5042 formed of, for example, silicon oxide and an untransformed portion 5043 made of, for example, a silicone resin having a refractive index lower than that of the transformed portions 5041 and 5042 is formed in the waveguide member 504. The transformed portion 5041 is arranged so that light L51 emitted from the optical fiber 501 is wave-guided to the prism 502. The prism 502 is arranged to reflect the light L51 at a reflecting surface 5021 and rotate a propagation direction of the light L51 by 90 degrees. The transformed portion 5042 is arranged so that the light L51 reflected by the surface 5021 is wave-guided to the light receiving element 503. That is, the optical-path conversion structure 500 has a function of rotating an optical path of the light L51 emitted from the optical fiber 501 by 90 degrees. The wavelength of the light L51 is not particularly limited, however, for example, it may be light near a wavelength of 1310 nanometers or near 1550 nanometers, which is frequently used in optical fiber communications.

The optical-path conversion structure 500 may be produced, for example, as described below. FIG. 22 is an explanatory diagram for an example of a producing method of the optical-path conversion structure depicted in FIG. 21. As depicted in FIG. 22, the optical fiber 501, the prism 502, and the light receiving element 503 are arranged first at predetermined positions, and a base material 505 made of a silicone resin is filled in between them. A laser beam L52 including the wavelength of 1270 nanometers is input from one end of the optical fiber 501. Because the laser beam L52 is emitted from the other end of the optical fiber 501 contacting the base material 505, a polymerizing reaction or the like occurs due to generation of the singlet oxygen in the base material 505. As a result, the transformed portion 5041 made of silicon oxide is gradually formed, and after the transformed portion 5041 is formed until reaching the prism 502, the transformed portion 5042 is gradually formed, thereby forming the optical waveguide. As a result, the base material 505 finally becomes the waveguide member 504, and the optical-path conversion structure 500 is completed.

Because it is possible to form the optical-path conversion structure 500 easily and increase the optical coupling efficiency between the optical fiber 501 and the light receiving element 503 without using an optical system such as a lens, it is possible to decrease the number of components and provide a downsized and low cost structure. The reflecting unit is not limited to the prism 502, and may be a metal mirror or a multilayer film. Further, a rotation angle of the light L51 is not limited to 90 degrees and may be set as appropriate. The material of the base material 505 and the waveguide member 504 is not limited to a silicone resin, and may be a resin such as PC or polyethylene.

The methyl silicone resin and the methyl phenyl silicone resin are exemplified above as the resin capable of causing the polymerization reaction by the singlet oxygen. It has been experimentally found that the degree of crosslink polymerization can be controlled by adding a filler to these resins. This finding indicates that an optimum waveguide structure can be intentionally produced upon application of the present invention to an optical waveguide.

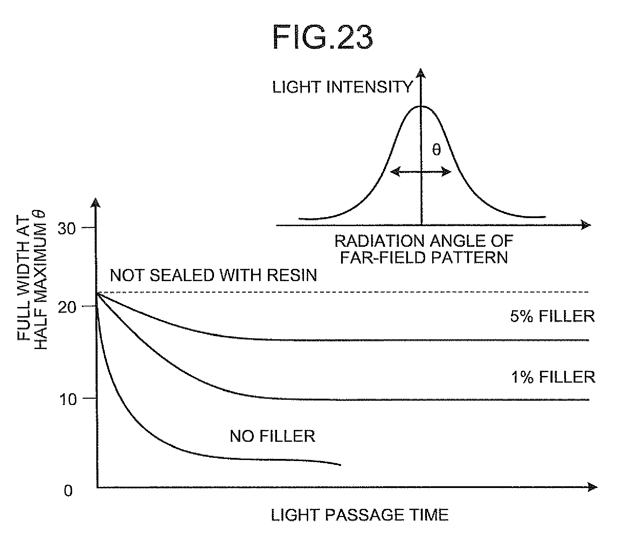

Results of experiments will be explained, for a case in which a semiconductor laser is sealed with a resin in the same manner as in FIG. 12, and a laser beam near 1270 nanometers is emitted to the resin to pass therethrough and for a case in which the semiconductor laser is not sealed. FIG. 23 depicts dependency on filler addition amounts of full widths at half maximum θ of an optical radiation far-field pattern of a semiconductor laser sealed with the resin. The horizontal axis represents the time period for which the laser beam from the semiconductor laser is made to pass through the resin and the vertical axis represents the full width at half maximum θ. A silicone resin is used as the resin, and a nanofiller is used as the filler.

In this example, the full width at half maximum θ of the unsealed semiconductor laser is 23 degrees, whereas when a nanofiller is not added, the full width at half maximum θ of the far-field image of light emitted from an end of the optical waveguide formed in the resin is about 5 degrees. It has been found that in the resin added with a nanofiller by 1 % (weight ratio), the full width at half maximum θ is stabilized at 10 degrees, and in the resin added with a nanofiller by 5 %, the full width at half maximum θ is stabilized at 15 degrees.

From the experimental results illustrated in FIG. 23, the degree of the polymerization reaction due to the singlet oxygen can be controlled by adding a nanofiller of a certain type, and a change in the refractive index of a polymerized portion can be decreased by increasing the weight ratio. Thus, a desired optical waveguide structure can be produced by adjusting the added amount of the filler.

For application to the optical waveguide, a component of the filler is preferably silica (SiO₂), because light transmission is required, and as to the shape, the filler may be amorphous or spherical like colloidal silica. As to the size, a nanofiller of several to several tens of nanometers and a microfiller of several tens of micrometers may be used.

### INDUSTRIAL APPLICABILITY

The present invention can be suitably used upon producing a desired material by locally changing the characteristics of a material by using activated oxygen.

## Claims

1. A material producing method **characterized in that** singlet oxygen is generated by irradiating light having an energy capable of changing at least an oxygen molecule to singlet oxygen, in a state with the oxygen molecule being penetrated into a material or a state with the oxygen molecule being present on a surface of the material, and a bond in a molecular structure in the material is broken by the generated singlet oxygen to cause a polymerization reaction or a substitution reaction to change a molecular weight of the material, thereby producing a desired material.

2. The material producing method according to claim 1, wherein the singlet oxygen is generated by irradiating light having at least a wavelength near 1270 nanometers.

3. The material producing method according to claim 1 or 2, wherein the desired material has a molecular weight greater than that of the material.

4. The material producing method according to claim 1 or 2, wherein the desired material has a molecular weight less than that of the material.

5. The material producing method according to any one of claims 1 to 4, wherein the material is a silicone resin.

6. The material producing method according to claim 5, wherein a methyl group in the silicone resin is broken off by the generated singlet oxygen to cause the polymerization reaction or the substitution reaction to cause vitrification.

7. The material producing method according to claim 6, wherein a group other than the methyl group is broken off by irradiating the light having the energy capable of changing at least the oxygen molecule to the singlet oxygen as well as light having an energy capable of breaking off the group other than the methyl group, and the generated singlet oxygen is used to cause a polymerization reaction or a substitution reaction at a position where the group other than the methyl group has been broken off.

8. The material producing method according to any one of claims 2 to 7, wherein the singlet oxygen is generated by irradiating light having a peak near 1270 nanometers.

9. The material producing method according to any one of claims 2 to 8, wherein the singlet oxygen is generated by irradiating laser light having a peak near 1270 nanometers.

10. The material producing method according to any one of claims 1 to 9, wherein the singlet oxygen is generated by irradiating light having the energy capable of changing at least the oxygen molecule to the singlet oxygen in a state with the material placed in an oxygen atmosphere.
